# FASCICULE DE BREVET EUROPEEN

(11) **EP 0 546 926 B1**
(45) Date de publication et mention de la délivrance du brevet: **01.10.1997**
(21) Numéro de dépôt: 92403323.6
(22) Date de dépôt: 08.12.1992
(51) Int. Cl.: B23B 31/16, B23Q 1/26

(54) **Mandrin de serrage pour machine-outil, notamment automatique, et son procédé d'obtention**
Spannfutter für Werkzeugmaschine und seine Herstellung
Chuck for machine-tool and its manufacture

(30) Priorité: 10.12.1991 FR 9115254
(43) Date de publication de la demande: 16.06.1993
(73) Titulaire: GAMET PRECISION, Société anonyme dite, F-27110 Le Neubourg (FR)
(72) Inventeur: Gaillard, Jean-Christophe, F-75002 Paris (FR)
(74) Mandataire: Colas, Jean-Pierre

(56) Documents cités:
- DE-A- 3 838 347
- DE-C- 800 201
- FR-A- 1 013 861

## Description

La présente invention est relative à un mandrin de serrage pour machine-outil comportant les caractéristiques du préambule de la revendication 1 (voir DE-A-38 38 347).

La présente invention résulte de la constatation suivante : lors de l'usinage d'une pièce, on a souvent besoin, dans un premier temps, de serrer énergiquement la pièce, par exemple lors de son ébauche et, dans un deuxième temps, d'avoir un faible effort de serrage afin de ne pas déformer la pièce, par exemple lors de sa finition.

Pour les mandrins de technologie actuelle, une diminution de cet effort de serrage ne peut être observée que lorsque l'on diminue sensiblement l'effort de commande du mandrin, par exemple dans un rapport de 8 à 1.

Cet écart entre la diminution de l'effort de commande et celle de l'effort de serrage résulte de la mauvaise réversibilité du mécanisme transformant l'effort de commande en effort de serrage radial, phénomène que l'on appelle aussi hystérésis.

La demanderesse a étudié les causes de cet écart et constate qu'une de ces causes pouvait se trouver dans les glissières qui servent à guider les porte-mors dans leur mouvement radial pour serrer la pièce.

Par "glissière", on entend ici une nervure présentant deux surfaces de glissement orientées dans des directions opposées, cette nervure étant destinée à pénétrer dans une rainure de la pièce antagoniste. Une nervure qui ne présente qu'une surface de glissement ne sera pas désignée par "glissière" dans le présent texte. Le nombre de glissières d'une pièce correspond à un nombre égal de rainures sur la surface antagoniste, et les parties en saillie de cette surface antagoniste situées entre lesdites rainures constituent à leur tour des glissières dont le nombre est inférieur d'une unité à celui des rainures de la même surface.

Habituellement, le porte-mors comporte un prolongement rigide, allongé radialement et à section en T, qui peut coulisser dans une entaille radiale de section correspondante, ouverte sur la face frontale avant du corps. Les branches transversales du T constituent chacune une glissière. Leurs deux surfaces orientées axialement sont usinées avec soin, de même que les surfaces correspondantes de l'entaille, et il existe, au repos, un très faible jeu entre les surfaces qui se font vis-à-vis.

Lors du serrage par l'extérieur d'une pièce, la glissière est sollicitée axialement en direction de l'avant du mandrin dans sa partie radialement la plus proche de l'axe, et en direction opposée dans sa partie radialement extérieure. C'est le contraire au cas où la pièce est creuse et serrée par l'intérieur.

On notera que, dans les mandrins destinés à équiper une machine-outil, les sollicitations que subissent les glissières sont très fortes, à cause d'une part de l'importance des forces de serrage, et d'autre part de la faible longueur des glissières, qui est limitée par la dimension radiale du mandrin.

Le frottement entre surfaces correspondantes dépend de nombreux facteurs, dont la nature des matériaux utilisés pour constituer ces surfaces, leur état de surface, la nature du lubrifiant et les pressions exercées.

On sait que, si deux surfaces sont maintenues en appui l'une sur l'autre avec une pression importante et pendant un certain temps sans déplacement, le film de matière lubrifiante qui existe initialement entre ces surfaces tend à se détériorer avec augmentation importante du frottement. Il paraît donc avantageux de réduire la pression qui s'exerce sur les surfaces en contact.

On connaît des mandrins de serrage où les entailles radiales, et les parties correspondantes du porte-mors, sont en double T au lieu d'être en simple T.

On observera que chaque face latérale du porte-mors comporte alors deux glissières, séparées par une rainure, alors que la paroi de la rainure qui lui fait face présente une glissière entourée de deux rainures.

Les dimensions de chaque glissière du porte-mors sont à peu près les mêmes que pour une disposition en simple T, et la rigidité du corps de mandrin est obtenue en augmentant sa dimension dans le sens axial, d'une longueur à peu près égale à l'augmentation de profondeur de l'entaille.

On aurait pu penser que, le nombre des surfaces en contact étant doublé, la pression, et donc le frottement, seraient réduits. Les inventeurs ont constaté avec surprise qu'un tel effet n'était signalé nulle part, et qu'en fait il n'était pas observé. Il semble que les avantages attendus du "double T" résultent essentiellement d'une meilleure tenue à l'usure : sur un mandrin neuf, une seule des glissières est habituellement sollicitée, elle s'use progressivement jusqu'à ce que la seconde puisse entrer en action, et, à partir de ce moment, l'usure de chaque glissière diminue.

La demanderesse a néanmoins continué ses recherches, et a constaté qu'une réduction surprenante de l'écart mentionné plus haut pouvait être obtenue, dans le cas de glissières à surfaces de guidage multiples, si certaines conditions étaient respectées. Ce sont ces conditions qui font l'objet de la présente invention.

L'invention fournit en conséquence un mandrin de serrage pour machine-outil, comportant les caractéristiques de la revendication 1.

L'invention introduit en conséquence une notion de flexibilité des glissières, notion qui est à l'opposé de l'enseignement habituel qui prévoit que les glissières doivent être le plus rigides possible. C'est cette flexibilité qui assure que les surfaces de glissement coopèrent toutes à la prise en charge des efforts dus au serrage.

Bien entendu, la flexibilité des glissières a une limite maximale qui correspond au fait qu'elles doivent transmettre au corps du mandrin les efforts qui résultent du serrage des mors sur la pièce à traiter, chaque glissière ne supportant qu'une partie de ces efforts, mais les déformations devant rester dans le domaine élastique.

La détermination du déplacement des surfaces de glissement peut se faire, en théorie, de façon simple, connaissant le module d'élasticité de la matière des glissières et la dimension axiale de celles-ci, en leur appliquant la charge résultant des efforts de serrage, divisée par le nombre de glissières.

Toutefois, une détermination approchée peut être faite de façon plus simple en considérant simplement l'épaisseur des glissières. On a constaté que, pour un mandrin en acier développant un effort de serrage total de 400 à 16000 daN, ce qui correspond, dans la technique usuelle, à un diamètre de mandrin de 80 à 250 mm, on peut utiliser des glissières d'épaisseur comprise entre 1 et 5 mm, l'épaisseur étant la distance entre les deux surfaces de glissement d'une même glissière. Pour des mandrins du même type développant un effort de serrage total de 16000 daN à 26000 daN, ce qui correspond à un diamètre de mandrin de 250 à 450 mm, on peut utiliser des glissières d'épaisseur comprise entre 2 et 8 mm, à condition que le nombre des glissières soit adapté à la force de serrage.

Ce nombre de glissières, pour les forces de serrage indiquées ci-dessus, est supérieur à trois, et de préférence compris entre quatre et dix.

La spécification indiquée ci-dessus, en ce qui concerne l'épaisseur maximale des glissières, est équivalente, dans la pratique des mandrins en acier de type usuel, à la spécification théorique donnée plus haut et qui concerne la flexibilité des mêmes glissières.

La faible épaisseur, ou dimension axiale, des glissières permet de multiplier celles-ci sans augmenter la profondeur de l'entaille du corps, et par conséquent, sans modifier de façon importante les dimensions axiales du corps de mandrin et du porte-mors par rapport à la disposition classique en T simple. Cela n'aurait pas été possible en suivant les enseignements de l'art antérieur, car la nécessité de glissières rigides, donc très épaisses, aurait obligé à une augmentation prohibitive de la dimension axiale des porte-mors et du corps, en correspondance avec l'augmentation du nombre des glissières.

La présence de glissières multiples a pour conséquence que la technique usuelle d'usinage par fraisage des surfaces de glissement dans la masse du corps devient difficilement utilisable, compte tenu du fait que les tolérances d'usinage doivent être réduites.

Pour résoudre cette difficulté, la demanderesse a été amenée à concevoir une nouvelle structure de corps de mandrin. Selon celle-ci, le corps est en plusieurs parties : un arrière-corps d'une seule pièce et un nombre d'avant-corps égal au nombre de porte-mors, chaque avant-corps étant en forme de secteur de cercle, avec des surfaces de glissement sur ses côtés radiaux, les avant-corps étant fixés sur une face frontale de l'arrière-corps de façon à définir entre-eux les entailles dans lesquelles coulissent les porte-mors.

De cette façon, on peut exécuter les glissières, tant sur le corps que sur le porte-mors, par la technique du meulage, en utilisant des meules de grand diamètre.

L'invention fournit donc aussi un procédé préféré pour l'obtention d'un mandrin du type qu'on vient d'indiquer. Selon ce procédé, pour préparer les surfaces de glissement sur les avant-corps et sur les porte-mors, on utilise une meule d'axe parallèle à la direction de l'axe du corps et dont la périphérie présente une série de gorges et de nervures circulaires à section carrée, toutes de même largeur, et on opère selon la technique dite de l'avance lente, par laquelle des rainures sont formées en une seule passe dans l'avant-corps ou le porte-mors, la même meule étant utilisée pour former l'avant-corps et les porte-mors.

De cette façon, on obtient des tolérances d'usinage particulièrement réduites, ce qui est avantageux si on se rapporte à la définition donnée en premier de l'invention.

En outre, on a constaté que ce mode opératoire fournit des surfaces de glissement finement polies, et particulièrement bien adaptées au maintien du film de lubrifiant sous les pressions réduites qui résultent de la structure de l'invention.

Dans ces conditions, on a pu constater qu'un relâchement significatif du serrage était obtenu avec une réduction de l'effort de commande d'un rapport de 3 à 2 seulement. Corollairement, la transmission de l'effort de serrage s'effectue avec un rendement particulièrement élevé. Ce rendement atteint en effet 90%, alors que, selon la technique antérieure, 70% paraissaient un maximum impossible à dépasser.

L'invention va maintenant être décrite de façon plus détaillée à l'aide d'un exemple pratique illustré à l'aide des dessins parmi lesquels :
Figure 1 représente, en perspective, un mandrin conforme à la présente invention, donné à titre d'exemple, avec un élément d'avant-corps enlevé.
Figure 2 représente, également en perspective, un élément d'avant-corps, démonté.
Figure 3 est une coupe partielle, agrandie, d'une partie du mandrin selon le plan III-III parallèle à l'axe.
Figure 4 est une coupe axiale très schématique du corps de mandrin.

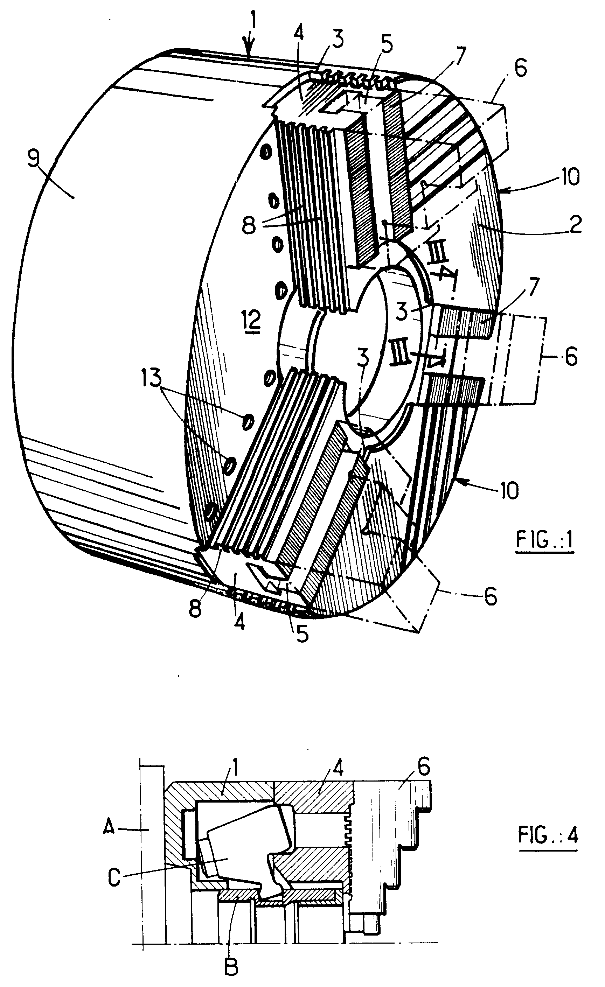

La figure 1 montre un corps de mandrin 1, de forme générale cylindrique, et qui présente, sur sa face frontale avant 2, trois entailles radiales 3, dans chacune desquelles peut coulisser un porte-mors 4. Chaque porte-mors présente une rainure radiale à section en T 5, qui sert à maintenir un mors 6 représenté en trait mixte sur la figure, grâce à des écrous 6A en T, qui prennent appui sur la face interne de la rainure 5 et sont serrés contre elle par des vis 6B. Des dentelures 7, portées par la face frontale du porte-mors et la face correspondante du mors, permettent de régler la position radiale de ce dernier.

Comme le montre la figure 4, le corps 1 est monté sur une machine-outil, représentée schématiquement et en partie avec la référence A.

A l'intérieur du corps 1 sont prévus des moyens pour faire coulisser le porte-mors 4 dans l'entaille 3, ces moyens comportant une bague de commande B, qui peut se déplacer le long de l'axe du corps, et dont le déplacement axial est transformé en un déplacement radial du porte-mors grâce à une pièce d'entraînement formant levier C, qui peut pivoter autour d'un axe de pivotement perpendiculaire à l'axe du corps et ne le croisant pas. Cette disposition est classique. On observera qu'il existe aussi, dans la pratique, des dispositifs pour transformer le mouvement axial de la bague de commande en mouvement radial des mors à l'aide d'une rampe à surface oblique. Cette disposition n'est pas la préférée. En effet, elle est de nature à entraîner des écarts entre forces de serrage et de desserrage plus importants que ceux qui résultent d'une transmission à levier.

La particularité de l'invention paraît clairement sur la figure 1, lorsqu'on observe les faces latérales des porte-mors. Ces faces, en effet, présentent chacune cinq glissières 8, c'est-à-dire cinq nervures à section carrée, sensiblement parallèles aux rayons du corps cylindrique qui passent par le plan de symétrie du porte-mors, et limitées par des surfaces frontales 8A, 8B dirigées respectivement vers l'avant et vers l'arrière. L'homme de métier voit immédiatement la différence avec un porte-mors traditionnel, qui ne porte, sur sa face latérale, qu'une glissière unique, l'ensemble du porte-mors ayant, dans le sens axial, une dimension sensiblement égale à celle du porte-mors qu'on est entrain de décrire. Selon la technique antérieure, si le porte-mors porte deux glissières, pour une structure en double T, sa dimension dans le sens axial est nettement supérieure.

Quoique les glissières 8 soient à section "carrée", c'est-à-dire avec les surfaces de glissement perpendiculaires au plan d'ensemble de la face qui les porte, elles peuvent également, sans sortir de l'invention, être trapézoïdales, c'est-à-dire avec leurs faces de glissement s'écartant de quelques degrés de la perpendiculaire au plan de la face, ou avoir une autre section.

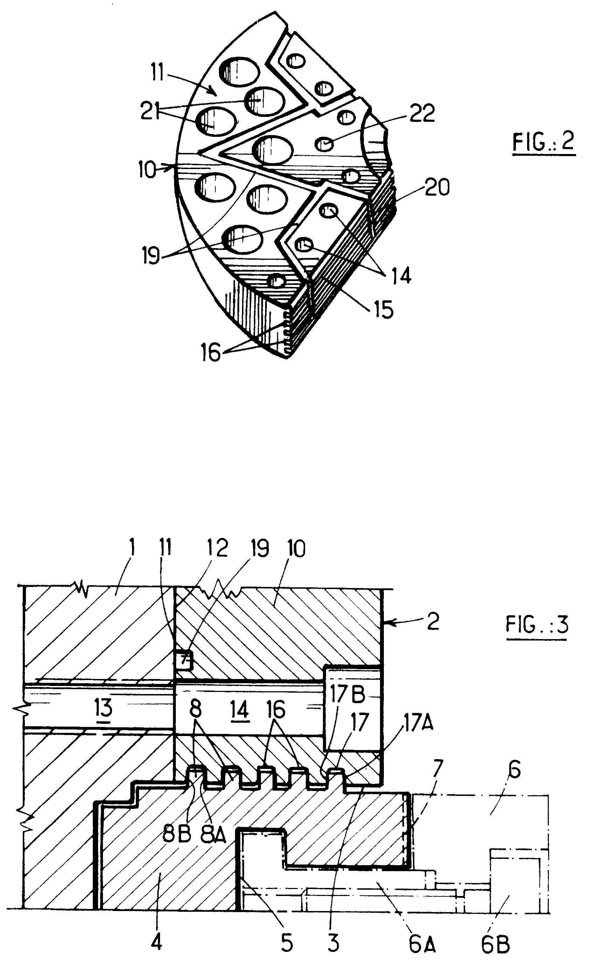

Le corps 1 est composé d'une partie arrière cylindrique 9, d'une seule pièce, et de trois avant-corps 10, fixés sur la partie arrière. Ces avant-corps ont à peu près la forme d'un secteur de cercle, et ils définissent entre-eux les entailles 3. Sur la figure 2, on a représenté un de ces avant-corps 10 démonté et placé de telle sorte que sa face arrière 11 soit visible. Cette face arrière 11 est plane et vient en appui sur la face frontale avant, plane, 12 de la partie arrière 9 du corps. Elle est fixée sur cette face grâce à des vis, non représentées, placées dans des alésages 13, 14 situés près du bord radial de chaque avant-corps 10. Les faces frontales avant des avant-corps constituent la face frontale 2 du corps, dans laquelle s'ouvrent les entailles 3. Les faces latérales rectilignes, à peu près radiales, 15, de chaque avant-corps, présentent chacune cinq rainures 16, à section carrée, de dimensions adaptées à celles des glissières 8 limitées par des surfaces frontales 17A, 17B dirigées respectivement vers l'avant et vers l'arrière, et séparées par quatre nervures formant elles-mêmes des glissières pour le porte-mors.

Comme le montre clairement la figure 3, le porte-mors 4 et le corps de mandrin ne sont pratiquement en contact que par les surfaces frontales de glissement 8A, 8B, 17A, 17B des glissières 8 et des rainures 16, ce qui assure un frottement minimal.

On observera que la face frontale arrière 11 d'un avant-corps 10 présente, en outre, des rainures 19 destinées à faciliter l'accès d'un lubrifiant aux glissières, par l'intermédiaire de canaux 20 dirigés axialement, des vides d'allégement, non traversants, 21, et une cavité 22 pour une goupille de centrage. Les rainures 19 pourraient être prévues dans la face frontale avant 12 de l'arrière-corps, ou sur les deux faces frontales 11 et 12 en appui l'une sur l'autre.

Dans l'exemple décrit, qui correspond à un mandrin de diamètre 210 mm, où la force de serrage normale est de 10.000 daN, l'épaisseur des glissières du porte-mors et des avant-corps est d'environ 2,5 mm. Les tolérances d'usinage sont d'environ 5 micromètres.

Le fait que les avant-corps 10 sont démontables permet de les usiner par meulage à vitesse lente avec la même meule que les porte-mors 4. Cette meule présente des nervures annulaires à section rectangulaire, séparées par des gorges de même forme et même largeur que ces nervures.

## Revendications

1. Mandrin de serrage pour machine-outil, comportant :
un corps (1), de forme générale cylindrique, avec une face frontale arrière, destinée à être fixée sur la machine-outil (A), et une face frontale avant (2), dirigée vers une pièce à serrer, ce corps présentant des entailles radiales (3) s'ouvrant sur sa face frontale avant, les parois latérales de chaque entaille comportant plusieurs premières glissières radiales (17) présentant des premières surfaces de glissement frontales (17A, 17B),
des porte-mors (4), qui portent des mors de serrage (6), et dont une partie peut être engagée dans une desdites entailles et porte, sur chacune des deux faces circonférentiellement opposées, au moins deux secondes glissières (8) présentant des secondes surfaces de glissement frontales (8A, 8B) aptes à coopérer avec lesdites premières surfaces de glissement pour guider radialement le porte-mors avec un frottement minimal,
des organes de commande (B, C) placés dans le corps et aptes à déplacer simultanément les porte-mors en direction d'une pièce à serrer, et à appliquer à chacun desdits porte-mors une force radiale de serrage,
cette force radiale imprimant au porte-mors un couple de basculement qui est équilibré par une réaction du corps, transmise au porte-mors par l'intermédiaire desdites premières et secondes surfaces de glissement frontales après compensation du jeu nécessaire au guidage,
et les tolérances d'usinage étant telles que les paires de surfaces de glissement coopérantes peuvent ne pas être toutes simultanément en contact lorsque lesdites forces de serrage ne sont pas appliquées aux mors,
caractérisé en ce que chaque glissière a une flexibilité calculée pour que, lorsque la force de serrage pour laquelle le mandrin est prévu est appliquée, la déformation des glissières a pour conséquence que toutes les surfaces de glissement coopérantes sont simultanément en contact malgré les tolérances d'usinage, et que la réaction du corps au couple de basculement est transmise par l'ensemble des surfaces de glissement.

2. Mandrin de serrage selon la revendication 1, caractérisé en ce que les glissières radiales du porte-mors et du corps de mandrin ont une épaisseur comprise entre 1,25 et 5 mm pour un mandrin en acier développant un effort de serrage total de 400 à 16.000 daN, et une épaisseur comprise entre 2 et 8 mm pour un mandrin en acier développant un effort de serrage total de 16.000 à 26.000 daN, le nombre de glissières étant fonction de la force de serrage.

3. Mandrin selon l'une des revendication 1 ou 2, caractérisé en ce que chacune des faces opposées du porte-mors comporte au moins trois glissières (8), et les parois latérales des entailles radiales du corps comportent au moins deux glissières,

4. Mandrin selon la revendication 3, caractérisé en ce que le nombre des glissières (8) situées sur chacune des faces opposées du porte-mors est compris entre 4 et 10 pour un mandrin de diamètre compris entre 80 et 450 mm, et développant un effort de serrage total compris entre 400 et 26000 daN.

5. Mandrin de serrage selon l'une des revendications 1 à 4, caractérisé en ce que le corps est en plusieurs parties : un arrière-corps (9) d'une seule pièce et un nombre d'avant-corps (10) égal au nombre de porte-mors, chaque avant-corps étant en forme de section de cercle, avec des surfaces de glissement sur ses côtés radiaux, les avant-corps étant fixés sur une face frontale (12) de l'arrière-corps de façon à définir entre-eux les entailles (3) dans lesquelles coulissent les porte-mors (4).

6. Mandrin de serrage selon la revendication 5, caractérisé en ce que l'arrière-corps et les avant-corps sont en appui par des surfaces frontales planes (11, 12), dont l'une au moins présente des rainures (19) destinées à faciliter l'accès du lubrifiant aux glissières.

7. Procédé d'obtention d'un mandrin selon la revendication 5 ou 6, caractérisé en ce que, pour préparer les surfaces de glissement sur les avant-corps et sur les porte-mors, on utilise une meule d'axe parallèle à la direction de l'axe du corps et dont la périphérie présente une série de gorges et de nervures circulaires, toutes de même largeur, et on opère selon la technique dite de l'avance lente, par laquelle des rainures sont formées en une seule passe dans l'avant-corps ou le porte-mors, la même meule étant utilisée pour former l'avant-corps et les porte-mors.

## Claims

1. A clamping chuck for a machine tool, comprising:
- a body (1), of generally cylindrical shape with a rear frontal face intended to be fixed to the machine tool (A) and a frontal face (2) directed towards a workpiece to be clamped, said body having radial cuts (3) opening onto its front frontal face, the lateral walls of each cut comprising several first radial slideways (17) having first frontal sliding surfaces (17A, 17B),
- jaw holders (4), which carry clamping jaws (6), part of which can be engaged in one of said cuts, said part carrying, on each of the two circumferentially opposed faces, at least two second slideways (8) having second frontal sliding surfaces (8A, 8B) capable of interacting, in order to guide the jaw holder radially with minimum friction, with said first sliding surfaces,
- control members (B, C) placed in the body and able simultaneously to displace the jaw holders in the direction of a workpiece to be clamped, and to apply a predetermined radial clamping force to said jaw holders,
- this radial force imposing on the jaw holder a rocking torque which is counterbalanced by a reaction of the body, said reaction being transmitted to the jaw holder through said first and second frontal sliding surfaces after taking up of the clearance required for guidance,
- and the machining clearance being such that the pairs of cooperating sliding surfaces cannot be all simultaneously in contact one with the other when said clamping forces are not applied on the jaws,
- characterized in that each slideway has a flexibility so calculated that, when the clamping force for which the chuck is designed, is applied, the deformation of the slideways results in all the cooperating sliding surfaces being simultaneously in contact one with the other in spite of machining tolerances, and that the reaction of the body against the rocking torque is transmitted by all the sliding surfaces.

2. A clamping chuck as claimed in claim 1, characterized in that the radial slideways of the jaw holder and of the chuck body have a thickness lying between 1.25 and 5 mm for a steel chuck developing a total clamping force of 400 to 16,000 daN, and a thickness lying between 2 and 8 mm for a steel chuck developing a total clamping force of 16,000 to 26,000 daN, the number of slideways being a function of the clamping force.

3. A chuck according to claim 1 or 2, characterized in that each of the opposite faces of the jaw holder comprises at least three slideways (8), and the lateral walls of the radial cuts of the body comprise at least two slideways.

4. A chuck according to claim 3, characterized in that the number of slideways (8) situated on each of the opposite faces of the jaw holder lies between 4 and 10 for a chuck of a diameter lying between 80 and 450 mm, and developing a total clamping force lying between 400 and 26,000 daN.

5. A clamping chuck according to any one of claims 14, characterized in that the body is made from several parts: a rear-body (9) made in one piece and a plurality of front-bodies (10) the number of which equals the number of jaw holders, each front-body being in the shape of a section of a circle, with sliding surfaces on its radial sides, the front-bodies being fixed to a frontal face (12) of the rear-body so as to define between them the cuts (3) in which the jaw holders (4) slide.

6. A clamping chuck according to claim 5, characterized in that the rear-body and the front-bodies bear against each other via plane frontal surfaces (11, 12), at least one of which has grooves (19) intended to facilitate the access of the lubricant to the slideways.

7. A method for obtaining a chuck according to claim 5 or 6, characterized in that, for preparing the sliding surfaces on the front bodies and on the jaw holders, a milling cutter is used whose axis is parallel to the direction of the axis of the body and whose periphery has a series of circular ribs and grooves, all of the same width, and the operation is carried out according to the so-called creep-speed technique, by which grooves are formed in a single pass in the front-body or the jaw holder, the same mill being used in order to form the front-body and the jaw holders.

## Patentansprüche

1. Spannfutter für Werkzeugmaschine, umfassend:
einen Körper (1) von allgemein zylindrischer Form mit einer rückwärtigen Stirnfläche, die zur Befestigung an der Werkzeugmaschine (A) vorgesehen ist, sowie einer vorderen Stirnfläche (2), die zu einem einzuspannenden Teil weist, wobei der Körper radiale Kerben (3) in seiner vorderen Stirnfläche aufweist, wobei die Seitenwände jeder Kerbe mehrere erste radiale Gleitbahnen (17) umfassen, die erste stirnseitige Gleitflächen (17A, 17B) aufweisen,
Spannbackenhalter (4), auf denen Spannbacken (6) befestigt sind und von denen ein Teil in eine der Kerben eingreifen kann und auf jeder der beiden auf dem Kreisumfang gegenüberliegenden Flächen wenigstens zwei zweite Gleitbahnen (8) hat, die zweite stirnseitige Gleitflächen (8A, 8B) aufweisen, die mit den ersten Gleitflächen so zusammenwirken können, daß sie den Spannbackenhalter mit einer minimalen Reibung radial führen,
im Körper angeordnete Stellglieder (B, C), die gleichzeitig die Spannbackenhalter in Richtung eines einzuspannenden Teils verschieben und auf jeden der Spannbackenhalter eine radiale Spannkraft ausüben können,
wobei diese Radialkraft im Spannbackenhalter ein Kippmoment induziert, das durch eine Reaktion des Körpers, die nach der Kompensation des für die Führung erforderlichen Spiels über die ersten und zweiten frontalen Gleitflächen auf den Spannbackenhalter übertragen wird, ausgeglichen wird,
und wobei die Bearbeitungstoleranzen so bemessen sind, daß die zusammenwirkenden Gleitflächenpaare nicht alle gleichzeitig in Kontakt sein können, wenn die Spannkräfte nicht auf die Spannbacken ausgeübt werden,
dadurch gekennzeichnet, daß jede Gleitbahn eine Flexibilität hat, die so berechnet ist, daß bei Ausübung der für das Spannfutter vorgesehenen Spannkraft die Verformung der Gleitbahnen zur Folge hat, daß alle zusammenwirkenden Gleitflächen trotz der Bearbeitungstoleranzen gleichzeitig in Kontakt sind, und daß die Reaktion des Körpers auf das Kippmoment durch das Zusammenwirken aller Gleitflächen übertragen wird.

2. Spannfutter nach Anspruch 1, dadurch gekennzeichnet, daß die radialen Gleitbahnen des Spannbackenhalters und des Futterkörpers eine Dicke zwischen 1,25 und 5 mm für ein Stahlfutter haben, das eine Gesamtspannbelastung von 400 bis 16.000 daN entwickelt, und eine Dicke zwischen 2 und 8 mm für ein Stahlfutter, das eine Gesamtspannbelastung von 16.000 bis 26.000 daN entwickelt, wobei die Anzahl der Gleitbahnen von der Spannkraft abhängt.

3. Spannfutter nach Anspruch 1 oder 2, dadurch gekennzeichnet, daß jede der gegenüberliegenden Flächen des Spannbackenhalters wenigstens drei Gleitbahnen (8) umfaßt und die Seitenwände der radialen Kerben des Körpers wenigstens zwei Gleitbahnen umfassen.

4. Spannfutter nach Anspruch 3, dadurch gekennzeichnet, daß die Anzahl der Gleitbahnen (8), die sich auf jeder der gegenüberliegenden Flächen des Spannbackenhalters befinden, zwischen 4 und 10 für ein Futter liegt, das einen Durchmesser zwischen 80 und 450 mm hat und eine Gesamtspannbelastung zwischen 400 und 26.000 daN entwickelt.

5. Spannfutter nach einem der Ansprüche 1 bis 4, dadurch gekennzeichnet, daß der Körper aus mehreren Teilen besteht: einem hinteren Element (9) aus einem einzigen Teil und einer Anzahl vorderer Elemente (10), die der Anzahl von Spannbackenhaltern entspricht, wobei jedes vordere Element die Form eines Kreisabschnitts mit Gleitflächen auf seinen radialen Seiten hat, wobei die vorderen Elemente auf einer Stirnfläche (12) des hinteren Elements derart befestigt sind, daß zwischen ihnen die Kerben (3) definiert werden, in denen die Spannbackenhalter (4) gleiten.

6. Spannfutter nach Anspruch 5, dadurch gekennzeichnet, daß das hintere Element und die vorderen Elemente auf ebenen Stirnflächen (11, 12) aufliegen, von denen wenigstens eine Vertiefungen (19) aufweist, die den Zugang des Schmiermittels zu den Gleitbahnen erleichtern sollen.

7. Herstellungsverfahren eines Futters nach Anspruch 5 oder 6, dadurch gekennzeichnet, daß für die Herstellung der Gleitflächen auf den vorderen Elementen und auf den Spannbackenhaltern ein Schleifkörper verwendet wird, dessen Achse parallel zur Richtung der Körperachse ist und dessen Umfang eine Reihe von kreisförmigen Rillen und Rippen aufweist, die alle gleich groß sind, und daß nach der sogenannten Kriechvorschubtechnik vorgegangen wird, durch die in einem einzigen Arbeitsgang Rillen in dem vorderen Element oder dem Spannbackenhalter ausgebildet werden, wobei derselbe Schleifkörper verwendet wird, um das vordere Element und die Spannbackenhalter auszubilden.
